# EUROPEAN PATENT APPLICATION

(11) **EP 3 139 126 A1**
(43) Date of publication of application: **08.03.2017**
(21) Application number: 15460124.9
(22) Date of filing: 20.12.2015
(51) Int. Cl.: G01B 9/04, G02B 21/00, G01B 11/24, G01B 11/02

(54) **OPTICAL SYSTEM OF CONFOCAL SENSOR WITH VISUAL INSPECTION**

(30) Priority: 05.09.2015 PL 41383715
(71) Applicant: Instytut Optyki Stosowanej, 03-805 Warszawa (PL)
(72) Inventor: Litwin, Dariusz, 00-681 Warszawa (PL); Kryszczynski, Tadeusz, 01-034 Warszawa (PL); Galas, Jacek, 05-092 Lomianki (PL); Czyzewski, Adam, 00-132 Warszawa (PL); Mikucki, Jerzy, 01-934 Warszawa (PL); Sitarek, Stefan, 05-830 Nadarzyn (PL)
(74) Representative: Woznicki, Jerzy

(57) **Abstract**

The optical system of a chromatic confocal sensor with visual inspection consists of a spectrometric branch for measuring the working distance and a visual branch for visual observation, which are equipped with a common front objective (1) with apochromatic correction, prismatic beam splitter (2) which is responsible for the division into branches, illuminator, lenses forming a beam of light in the spectrometric branch, and a photocoupler (5) which introduces white light and redirects received monochromatic light, whose wavelength corresponds to the variable working distance, to the spectrophotometer (6). The spectrometric branch contains, between the prismatic beam splitter (2) and the photocoupler (5), a chromatic telescope-like lens system (3) and an additional transceiver objective (4) with apochromatic correction, whose numerical aperture is the same as the numerical aperture of the front objective (1). The visual branch contains a tubular objective (8) and an additional beam splitter (9) between the tubular objective (8) and the visual illuminator (10), wherein the tubular objective (8) is located between the prismatic beam splitter (2) and the additional beam splitter (9) which passes the white light beam from the visual illuminator (10) and reflects the beam sent from the tubular objective (8), and an adjustable objective (11), for instance an eyepiece, is located on the path of the reflected beam.

## Description

The subject of the invention is an optical system of confocal sensor with visual inspection for measuring optical parameters of materials, 2D surface profiles or phase shift dispersion with the feature of random visual preview with the use of a camera or an eyepiece.

Optical parameters of materials are tested with the use of interferometric systems with confocal system that uses chromatic aberration for acquiring information about the structure and geometry of a sample. The article "Pomiar odleg 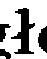 ości w wielu p 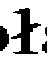 aszczyznach" [Measurement of Distance in Many Planes], Elektronika Praktyczna [Practical Electronics] No. 2/2012, which presents Micro-Epsilon Messtechnik's offer for precise sensors, includes a description of confocal, chromatic rule of measurement with the use of white light. Standard LED light, transmitted from the controller via optical fibre to the sensor, passes through an optical system with multiple lenses that focus light onto the surface of the object being measured. The lenses are arranged in such a way, that a specific chromatic aberration occurs. This means that light with different wavelengths or colours is concentrated under different angles. Light reflected from the surface returns to the controller, where it passes through the optical system, which displays it on the photosensitive element of the sensor. The photosensitive element of the sensor detects the spectrum of reflected light and determines the distance from the object being measured.

Patent specification JPH09113240 describes a confocal scanning microscope for the examination of samples in a three-dimensional coordinate system in which the sample, illuminated with white light, is distanced from the focal point of the lens, and information about the geometry or structure of the sample is detected by a spectroscope based on spectral analysis of the light beam reflected from the sample's surface. In this solution, the measurement path axis coincides with the direction of the beam illuminating the sample. In this type of microscope observation of the sample is difficult because the obtained sample image is distorted by lens aberration.

European patent EP2031428 describes a scanning microscope with the main optical axis of the measuring path is inclined with respect to the measurement plane. In this solution a transparent movable wedge with a known refractive index was used to compensate for the difference between the focal plane and the plane of measurement. Moreover, the microscope is equipped with an illuminator from which the illuminating beam is supplied to the main optical axis by means of a light splitter. This solution enables visual inspection of the sample, but does not provide information about the working distance due to the averaged effect of the interaction of light and matter.

The aim of the invention is to construct an optical system of a modified confocal sensor without the disadvantages of the prior art sensors, which enables random visual preview through an eyepiece or a digital camera. This objective was achieved in a two-branch optical system, in which one branch with a photocoupler is used for spectroscopic measurement of working distance and the second branch with an illuminator is used for visual observation.

The optical system of confocal sensor with a visual inspection, which consists of a spectrometric branch to measure the working distance and a visual branch for visual observation, is equipped with a front objective, shared by both branches, apochromatic correction, prismatic beam splitter which is responsible for splitting into branches, illuminator, lenses forming a beam of light in the spectrometric branch, and an photocoupler which introduces white light and a discharges light dispersed by variable working distance to the spectrophotometer, according to the invention is characterised in that the spectrometric branch is equipped, between the prismatic beam splitter and the photocoupler, with a chromatic quasi-spyglass and an additional transceiver objective with apochromatic correction, which numerical aperture is the same as the numerical aperture of the front objective, while the visual branch contains a tubular objective and an additional beam splitter between the tubular lens and the visual illuminator, wherein the tubular objective is located between the prismatic beam splitter and the additional beam splitter which passes the beam of white light from the visual illuminator and reflects the beam sent from the tubular objective, and an adjustable objective is located on the path of the reflected beam.

Preferably, the front objective is composed of three lenses, wherein the positive lens, located on the side of the prismatic beam splitter, is made of an optical material having a coefficient of relative partial dispersion P_{i,h} within the range from 0.70 to 0.75 and the ΔP_{i,H} deviation within the range from 0.18 to 0.27, and the numerical aperture of the front objective is 0.12.

Preferably, the prismatic beam splitter is a beamsplitting cube with a wide and uniform spectrum transfer characteristic in the passing and the reflected beam.

Preferably, the additional beam splitter is a pellicle film splitter.

Preferably, the chromatic quasi-spyglass consist of four lenses: two positive external lenses made of flint glass with Abbe number of 30 to 42 and two negative inner lenses made of crown glass with Abbe number of 58 to 70, wherein the angular magnification the spyglass is preferably in the range of 0.8 to 1.3 for the average wavelength of the light.

Preferably, the transceiver objective is composed of two lenses, positive and negative, wherein the positive lens is made of an optical material having a coefficient of relative partial dispersion P_{i,h} within the range from 0.70 to 0.75 and the ΔP_{i,H} deviation within the range from 0.18 to 0.27.

Preferably, the tubular objective consist of two lenses.

Preferably, the adjustable objective is sliding parallel to the front objective axis.

Preferably, the photocoupler is a prismatic coupler.

It is also preferably if the photocoupler is a fibre optic coupler.

In the sensor, according to the invention, both branches have their own source of white light containing a continuous spectrum of visible light waves. The light source in the spectrometric branch can be introduced through the optic, prismatic or fibre optic coupler, and in the visual branch - through an additional pellicle beam splitter or a beamsplitting cube. Since both branches of the optical system make use of a microscope objective with apochromatic correction, the sensor layout retains high image reproduction quality with changes in the working distance both in the white and monochrome light, which enables good visual observation. At the same time, this enables good monochrome reproduction needed in the spectrometric branch without adding additional chromatic flaws. Apochromatic objective correction is achieved by the fact that the positive lens is made of optical material with a selected relative partial dispersion ratio with a high value of deviation in the short wave range.

Due to the use of the chromatic quasi-spyglass with lenses with specially selected Abbe number dispersion coefficients of the dispersion, longitudinal chromatic aberration on the optical axis of the size needed for the assumed distance measurement was obtained in the sensor's subject space. The principle of the selection of material dispersion is opposite to that which applies in the case of achromatic optical systems, that is systems which are free of chromatic aberration on the optical axis.

Due to the use of the prismatic beam splitter with a wide and uniform spectrum transfer characteristic, an independence of the working distance measurement from the distribution of the beam and a good reproduction quality in the visual branch were obtained.

Due to the use of the transceiver objective with apochromatic correction , the sensor's layout sensor retains the high image reproduction quality with changes in the working distance both in the white transmitting light and the receiving monochrome light, which allows for decoupling of measurement from the condition of chromatic correction of this objective without adding additional errors.

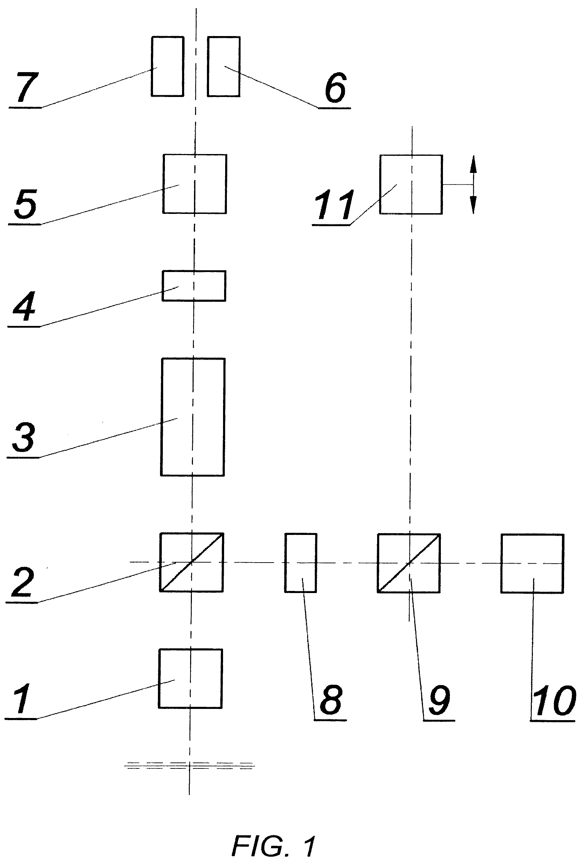

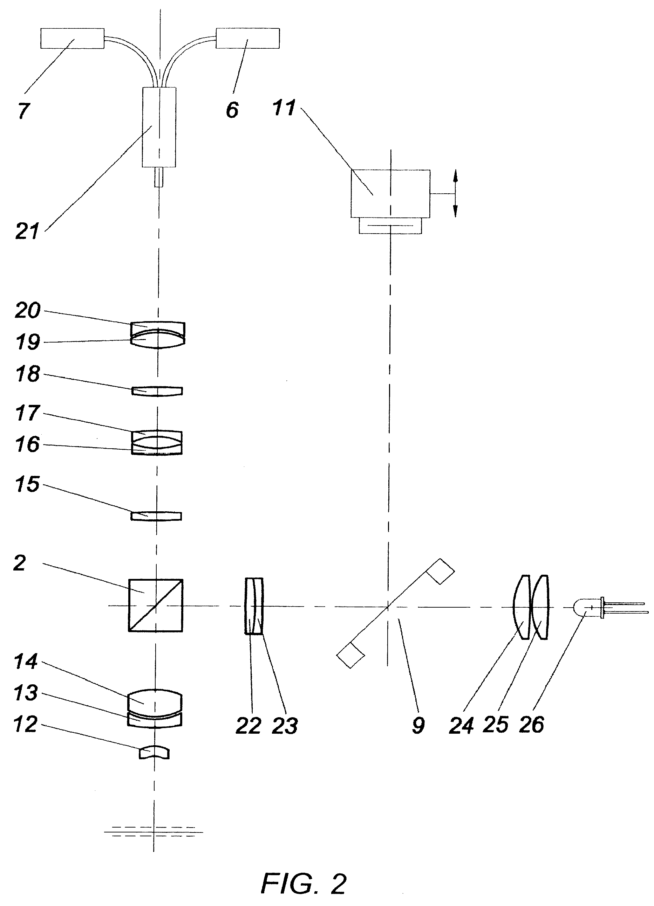

The invention is visualised in the installation example on a drawing, where Fig. 1 shows a schematic diagram of a confocal sensor with visual inspection, and Fig. 2 shows details of the optical system of a confocal sensor with visual inspection.

As shown in Fig. 1, the optical system of confocal sensor with visual inspection consists of a spectrometric branch for measuring the working distance and a visual branch for visual observation, which are equipped with a common front objective 1 with apochromatic correction, prismatic beam splitter 2 which is responsible for the division into branches , illuminator, lenses forming a beam of light in the spectrometric branch, and a photocoupler 5 which introduces white light from the white light source 7 and discharges light dispersed by the variable working distance to the spectrophotometer 6.

The spectrometric branch contains, between the prismatic beam splitter 2 and the photocoupler 5, a chromatic quasi-spyglass 3 and an additional transceiver objective 4 with apochromatic correction, having numerical aperture the same as the numerical aperture of the front objective 1.

The visual branch consists of a tubular objective 8 and an additional beam splitter 9 between the tubular objective 8 and the visual illuminator 10. The tubular objective 8 is located between the prismatic beam splitter 2 and the additional beam splitter 9 which passes white light beam from the visual illuminator 10 and reflects the beam sent from the tubular objective 8. An adjustable objective 11, in the form of a camera or an eyepiece, is situated in the path of the beam reflected from the additional beam splitter 9.

As shown in Fig. 2, the front objective is composed of three lenses 12, 13, 14, wherein the positive objective 14 is made of an optical material having a coefficient of relative partial dispersion P_{i,h} + 0.7462 within the range from 0.70 to 0.75 and the ΔP_{i,H} deviation = 0.2636 within the range from 0.18 to 0.27. These are the preferred ranges to achieve apochromatic correction, wherein the given ranges are the most preferred parameter values close to maximum values.

The front objective 1 has the numerical aperture of 0.12, imaging focal length of 40 mm, subject field of vision of 2.2x1.75 mm and the working distance of 19.6 mm. The additional lens 14 is situated on the side of the prismatic beam splitter 2.

The prismatic beam splitter 2 is a 13x13 mm beamsplitting cube, which is characterised by a wide and uniform spectrum transfer characteristic in the passing and the reflected beam.

The chromatic quasi-spyglass 3 consists of four lenses: two positive external lenses 15,18 made of flint glass with Abbe number of 30 to 42 and two negative inner lenses 16,17 made of crown glass with Abbe number of 58 to 70, wherein the angular magnification the spyglass is preferably in the range of 0.8 to 1.3 for the average wavelength of the light.

The transceiver objective 4 consists of two lenses 19,20, positive and negative, and is characterised by the numerical aperture of 0.12, imaging focal length of 40 mm, field of vision with the diameter of 0.06 mm and the working distance of 34.1 mm, wherein the positive lens 19 is made of an optical material with having a coefficient of relative partial dispersion P_{i,h}= 0.7462 within the range of 0.70 to 0.75 and ΔP_{i,h} deviation = 0.2636 within the range of 0.18 to 0.27. These are the preferred ranges to achieve apochromatic correction, wherein the given ranges are the most preferred parameter values close to maximum values.

The spectrophotometer 6 and the source of light 7 are connected to the sensor's optical system with a photocoupler 5, particularly the fibre optic coupler 21, as shown in Fig. 2.

The tubular objective 8 consists of two lenses 22, 23 and is characterised by the numerical aperture of 0.03, imaging focal length of 160 mm, average working distance of 129.36 mm, and the field of vision of 8.8x6.6 mm, wherein the tubular objective is used for both received visual image creation with the use of a sliding adjustable objective 11 and the illumination with the additional beam splitter 9 and the visual illuminator 10.

The visual illuminator 10 consists of two lenses 24 and 25 and the additional source of white light 26.

The sliding adjustable objective 11, in the form of a camera or an eyepiece, is mounted parallel to the front objective axis 1. The sliding objective 11 makes a useful movement within the range of ±20.4 mm which is required for setting sharpness of the visual preview.

The optical system of a confocal sensor with the above parameters is adapted for the measurement of working distance within the range of 2.55 mm with a change in wavelength from 400 nm to 700 nm.

## Claims

1. An optical system of confocal sensor with a visual inspection, which consists of a spectrometric branch to measure the working distance and a visual branch for visual observation, equipped with a front objective, shared by both branches, apochromatic correction, prismatic beam splitter which is responsible for splitting into branches, illuminator, lenses forming a beam of light in the spectrometric branch, and an photocoupler which introduces white light and a discharges light dispersed by variable working distance to a spectrophotometer, **characterised in that** the spectrometric branch is equipped, between the prismatic beam splitter (2) and the photocoupler (5), with a chromatic quasi-spyglass (3) and an additional transceiver objective (4) with apochromatic correction, which numerical aperture is the same as the numerical aperture of the front objective (1), while the visual branch contains a tubular objective (8) and an additional beam splitter (9) between the tubular objective (8) and the visual illuminator (10), wherein the tubular objective (8) is located between the prismatic beam splitter (2) and the additional beam splitter (9) which passes the beam of white light from the visual illuminator (10) and reflects the beam sent from the tubular objective (8), and an adjustable objective (11) is located on the path of the reflected beam.

2. The system according to claim 1, wherein the front objective (1) is composed of three lenses (12, 13, 14), wherein the positive lens (14), located on the side of the prismatic beam splitter (2), is made of an optical material having a coefficient of relative partial dispersion P_{i,h} within the range from 0.70 to 0.75 and the ΔP_{i,H} deviation within the range from 0.18 to 0.27, and the numerical aperture of the front objective (1) is 0.12.

3. The system according to claim 1, wherein the prismatic beam splitter (2) is a beamsplitting cube with a wide and uniform spectrum transfer characteristic in the passing and the reflected beam.

4. The system according to claim 1, wherein the additional beam splitter (9) is a pellicle film splitter.

5. The system according to claim 1, wherein the chromatic quasi-spyglass (3) consists of four lenses (15, 16, 17, 18): two positive external lenses (15,18) made of flint glass with Abbe number of 30 to 42 and two negative inner lenses (16,17) made of crown glass with Abbe number of 58 to 70, wherein the angular magnification the spyglass is preferably in the range of 0.8 to 1.3 for the average wavelength of the light.

6. The system according to claim 1, wherein the system is notable for the fact that the transceiver objective is composed of two lenses (19, 20), positive and negative, wherein the positive lens (19) is made of an optical material having a coefficient of relative partial dispersion P_{i,h} within the range from 0.70 to 0.75 and the ΔP_{i,H} deviation within the range from 0.18 to 0.27.

7. The system according to claim 1, wherein the tubular objective (8) consists of two lenses (22, 23).

8. The system according to claim 1, wherein the adjustable objective (11) is sliding parallel to the front objective axis (1).

9. The system according to claim 1, wherein the photocoupler (5) is a prismatic coupler.

10. The system according to claim 1, wherein the photocoupler (5) is a fibre optic coupler (21).
